# FASCICULE DE BREVET EUROPEEN

(11) **EP 0 879 941 B1**
(45) Date de publication et mention de la délivrance du brevet: **05.03.2003**
(21) Numéro de dépôt: 98401170.0
(22) Date de dépôt: 15.05.1998
(51) Int. Cl.: F02B 17/00, F02B 23/10

(54) **Moteur à injection directe et allumage commandé**
Brennkraftmaschine mit Direkteinspritzung und mit Fremdzündung
Spark-ignited engine with direct injection

(30) Priorité: 20.05.1997 FR 9706115
(43) Date de publication de la demande: 25.11.1998
(73) Titulaire: Renault s.a.s., 92100 Boulogne Billancourt (FR)
(72) Inventeur: Floch, Alain Emile Guillaume, 91460 Marcoussis (FR)
(74) Mandataire: Srour, Elie

(56) Documents cités:
- EP-A- 0 464 622
- EP-A- 0 558 072
- EP-A- 0 778 402
- EP-A- 0 778 403

## Description

L'invention concerne les moteurs à injection directe et allumage commandé, et plus particulièrement les chambres de combustion de ces moteurs.

Par opposition aux moteurs à injection indirecte dans lesquels les injecteurs de carburant sont situés en arnont de la chambre de combustion et débouchent dans les conduits d'admission, les moteurs à injection directe comportent des injecteurs débouchant directement dans les chambres de combustion des cylindres-moteurs.

L'invention propose un moteur à combustion interne à injection directe et allumage commandé, comprenant une chambre de combustion à bougie centrée et injecteur excentré par rapport à l'axe du cylindre-moteur.

Selon une caractéristique générale de l'invention, le moteur comprend un élément de culasse en forme de toit, dont l'arête s'étend entre les orifices d'admission et les orifices d'échappement avec l'injecteur débouchant dans la chambre entre les plans diamétraux verticaux, perpendiculaires à l'arête, des orifices d'admission, l'injecteur étant à la fois incliné par rapport au plan du joint de culasse et par rapport à un plan perpendiculaire à l'arête du toit. L'inclinaison verticale de l'injecteur, par exemple d'un angle voisin de 45° par rapport au plan du joint de culasse, permet d'injecter, en mode stratifié (c'est-à-dire à environ 60° avant le point mort haut), le carburant liquide dans le fond du piston tout en réduisant les phénomènes de mouillage des parois du cylindre-moteur en fonctionnement homogène.

Par ailleurs, l'inclinaison de l'injecteur par rapport à un plan perpendiculaire à l'arête du toit, permet de faire pénétrer le jet de carburant sensiblement tangentiellement dans un piston équipé d'une cavité.

Une implantation de l'injecteur, dont le nez débouche dans la chambre de combustion au niveau de la zone de chasse entre les soupapes d'admission, permet de conserver les diamètres de soupapes d'admission et d'échappement de moteurs conventionnels à injection indirecte fonctionnant à richesse 1.

Par ailleurs, afin de permettre l'intégration de l'injecteur dans cette configuration, il est avantageusement prévu que le moteur comprenne un premier conduit d'admission raccordé sensiblement verticalement sur l'un des orifices d'admission, le corps de l'injecteur étant au moins partiellement situé sur ce conduit d'admission.

Selon un mode de réalisation de l'invention, un deuxième conduit d'admission est raccordé sensiblement horizontalement sur l'autre orifice d'admission, ce deuxième conduit ayant une génératrice située partiellement dans un plan sensiblement parallèle à celui contenant les orifices d'échappement. Ceci permet notamment d'induire un fort mouvement de tourbillon ("swirl" en langue anglaise) dans le cylindre-moteur.

Selon un mode de réalisation de l'invention, la chambre de combustion comprend également un piston coulissant dont la face supérieure comporte une cavité excentrée (par rapport à l'axe du cylindre-moteur) située sous les orifices d'admission, la bougie et l'injecteur.

La cavité du piston présente avantageusement une dimension plus importante dans une direction parallèle à l'arête du toit que dans une direction perpendiculaire à l'arête du toit. En d'autres termes, la cavité du piston est localisée sous les soupapes d'admission et est de dimension plus importante dans le sens de l'arête du toit que dans le sens admission/échappement. Le périmètre de la cavité inclut par projection la bougie et l'injecteur sur la face supérieure du piston. Selon un mode de réalisation de l'invention, le fond de la cavité est sensiblement plat. Ceci étant, la cavité peut comporter un bossage interne central permettant de donner une composante ascendante à la trajectoire de la masse gazeuse vers le point d'allumage.

Afin de permettre l'obtention d'un taux de compression compris entre 10 et 12, la face supérieure du piston épouse avantageusement partiellement la forme de l'élément de culasse.

D'autres avantages et caractéristiques de l'invention apparaîtront à l'examen de la description détaillée de modes de réalisation nullement limitatifs, et des dessins annexés, sur lesquels :
la figure 1 est une vue schématique d'une chambre de combustion d'un moteur selon l'invention,
la figure 2 est une vue de côté schématique d'un cylindre-moteur montrant l'agencement de l'injecteur dans le moteur selon l'invention,
la figure 3 est une vue de dessus schématique de l'élément de culasse délimitant la chambre de combustion de la figure 1,
la figure 4 est une vue de dessus schématique de la face supérieure du piston de la chambre de combustion de la figure 1,
la figure 5 illustre une variante de réalisation d'un tel piston, et
les figures 6 et 7 illustrent des mouvements tourbillonnaires particuliers de la masse de carburant.

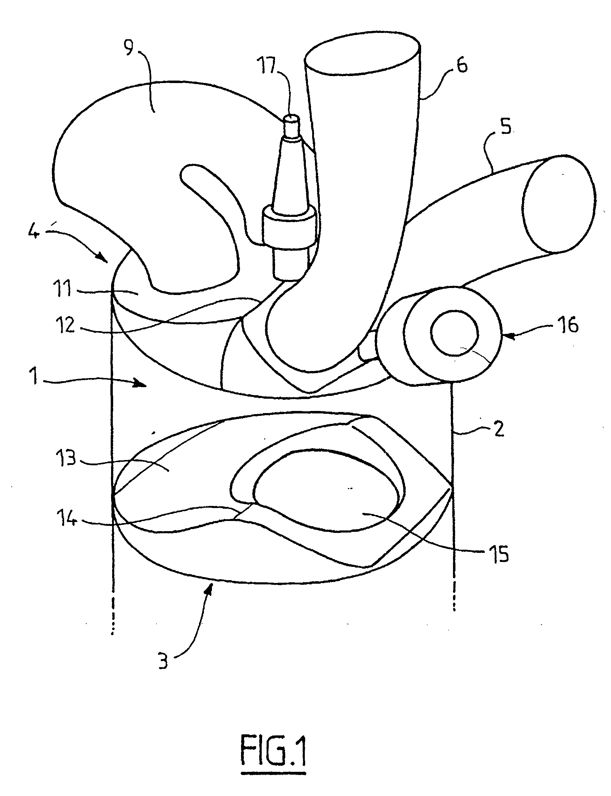

Sur la figure 1, la référence 1 désigne une chambre de combustion d'un moteur selon l'invention, illustrée en perspective sur cette figure et délimitée par les parois d'un cyclindre-moteur 2, la face supérieure d'un piston 3 coulissant dans le cylindre 2 et la face inférieure de l'élément de culasse 4.

L'élément de culasse 4 comporte une partie 11 en forme de toit dont l'arête 12 s'étend entre les deux conduits d'admission 5 et 6 et les deux conduits d'échappement 9 et 10, jumelés dans cet exemple.

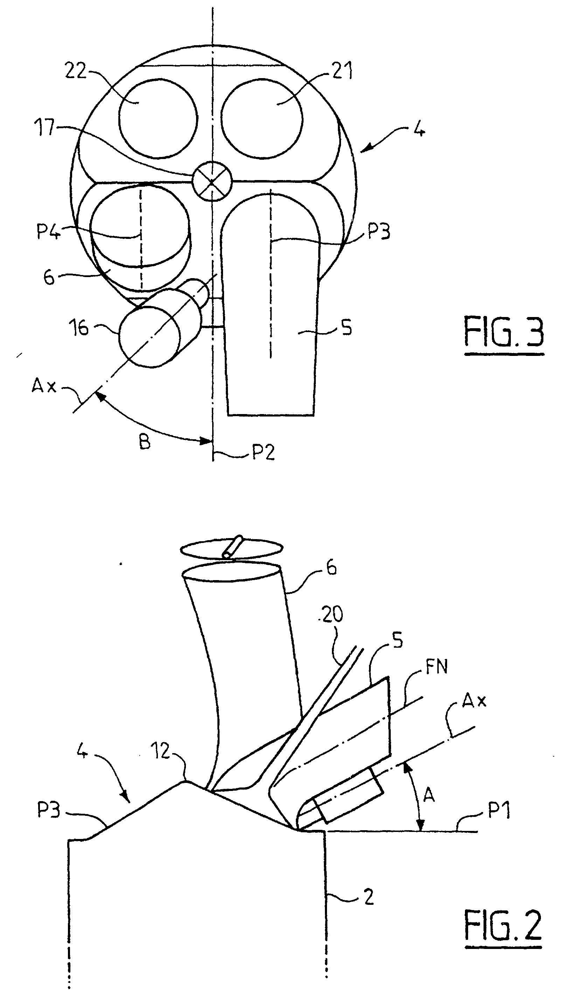

Comme on peut le voir plus particulièrement sur les figures 1 et 2, l'un des conduits d'admission, à savoir le conduit 6, est raccordé sensiblement verticalement sur l'un des orifices d'admission, tandis que l'autre conduit d'admission 5, est raccordé sensiblement horizontalement sur l'autre orifice d'admission et présente une génératrice FN partiellement dans un plan sensiblement parallèle à celui contenant les orifices d'échappement 21 et 22 et référencé P3.

Une bougie d'allumage 17 débouche au niveau de l'arête 12 de l'élément de culasse 4 au centre de la chambre de combustion 1. Cette bougie est donc centrée par rapport à l'axe du cylindre-moteur 2. Par ailleurs, un injecteur de carburant (ici d'essence) 16, excentré par rapport à la bougie 17, et donc par rapport à l'axe du cylindre-moteur, comporte un nez débouchant dans la chambre de combustion entre les deux plans diamétaux verticaux P3 et P4 des orifices d'admission, plans perpendiculaires à l'arête 12. Plus précisément, le nez débouche, en retrait par rapport aux orifices d'admission, au niveau de la zone de chasse entre les soupapes d'admission 20. Comme illustré plus particulièrement sur la figure 3, le corps de l'injecteur 16 est au moins partiellement situé sous le conduit d'admission vertical 6.

L'axe Ax de l'injecteur fait un angle A d'environ 45° par rapport au plan P1 du joint de culasse. Cet axe Ax fait par ailleurs un angle B compris entre environ 15° et environ 20°, et par exemple sensiblement égal à 15°, par rapport à un plan vertical P2 perpendiculaire à l'arête 12 du toit.

Le piston 3 comporte une cavité 15 excentrée par rapport à l'axe du cylindre-moteur et localisée sous les soupapes d'admission. Cette cavité est de préférence un bol à fond quasiment plat. Ce bol pourra être plus ou moins ré-entrant, c'est-à-dire plus ou moins enfoncé latéralement dans le piston (par opposition à un bol à bord vertical droit), afin d'améliorer le transport de la masse de carburant 30 vers le point d'allumage.

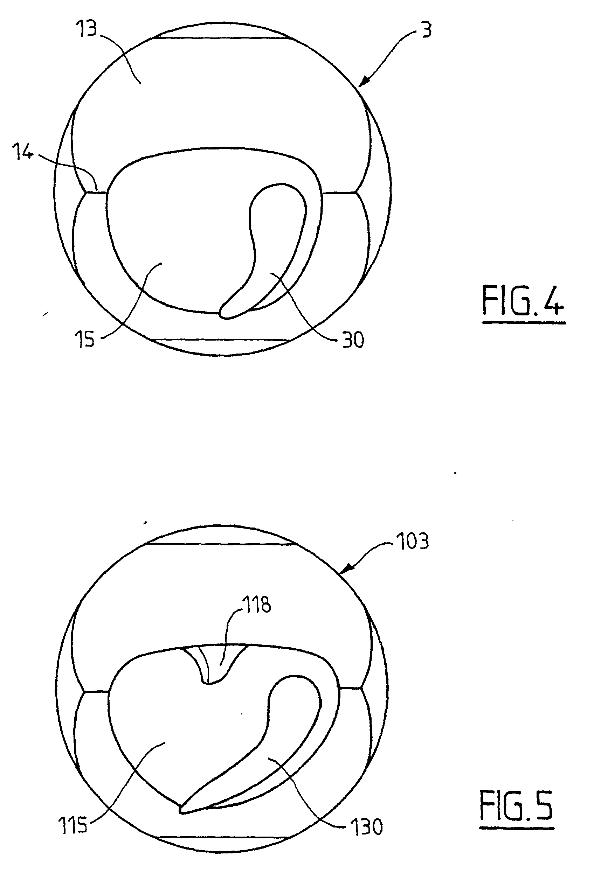

En variante, comme illustré sur la figure 5, la région centrale de la cavité 115 du piston 103 peut présenter un bossage interne 118 permettant de donner une composante ascendante à la trajectoire de la masse gazeuse 130 vers le point d'allumage.

Afin de permettre l'obtention d'un taux de compression compris entre 10 et 12, la face supérieure du piston épouse partiellement la forme de l'élément de culasse. Plus précisément, la face supérieure du piston comporte une partie latérale 13 ayant également la forme d'un toit, l'arête 14 de ce dernier venant sensiblement en vis-à-vis avec l'arête 12 du toit de la culasse lors de la position haute du piston.

La cavité 15 ou 115 du piston a une dimension plus importante dans la direction de l'arête 14 ou 12 du toit que dans la direction orthogonale, c'est-à-dire dans la direction admission-échappement. Le périmètre de la cavité inclut par projection la bougie 17 et l'injecteur 16.

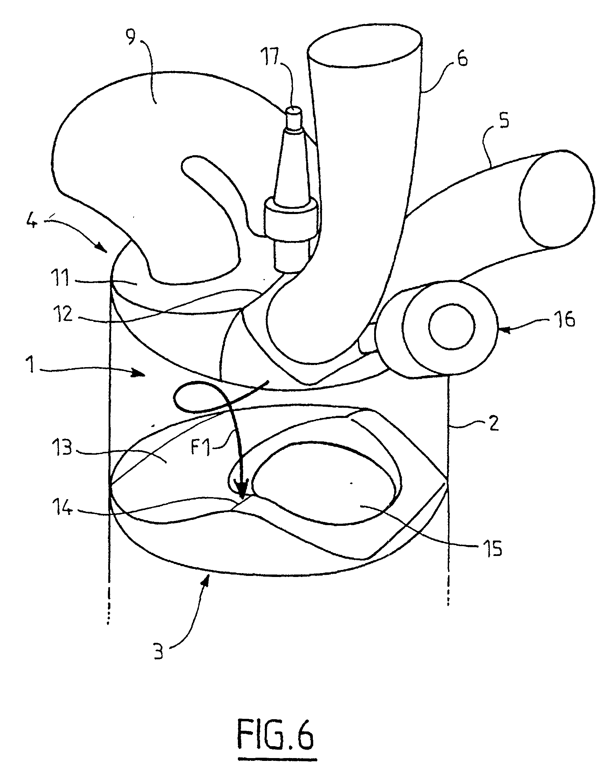

Le transport de la phase gazeuse du carburant vers la bougie sera avantageusement assuré par des effets aérodynamiques convectifs de type tourbillon d'axe vertical (communément désigné par le terme "swirl" par l'homme du métier), en mode stratifié (flèche F1, figure 6).

Ce mouvement de tourbillon est par exemple obtenu par obturation du conduit d'admission vertical en mode de fonctionnement stratifié. La forme et l'orientation du conduit horizontal permettent d'induire un fort mouvement de tourbillon du type "swirl" dans le cylindre.

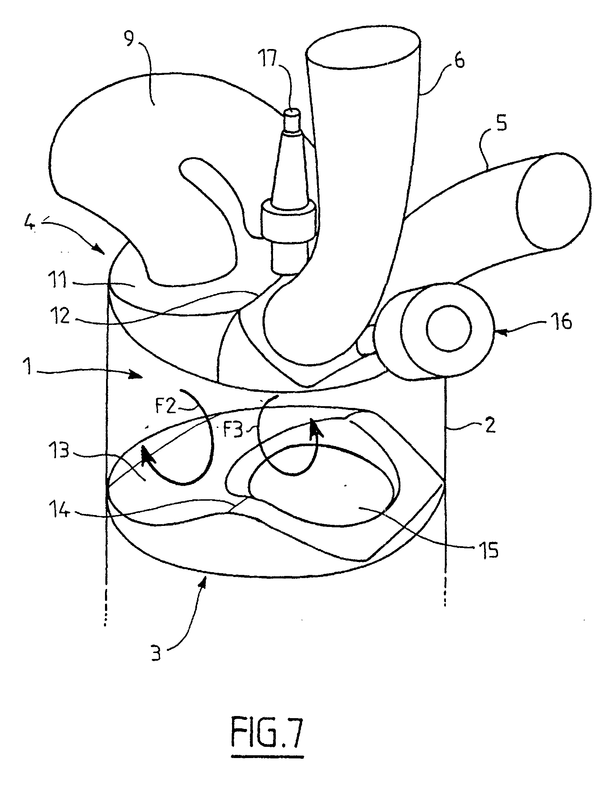

Les différents moyens d'obturation du conduit seront inactifs aux charges élevées en mode de fonctionnement à richesse 1 homogène. Par ailleurs, l'homme du métier remarquera que, d'une façon générale, les deux conduits d'admission sont raccordés sur les deux orifices d'admission correspondants, de façon à permettre d'inverser en sortie de chacune des deux soupapes d'admission le sens de mise en rotation de la charge de carburant. De ce fait, notamment aux charges élevées à richesse 1 homogène, un fort brassage est induit dans le cylindre pendant la phase d'admission, ce qui permet d'homogénéiser la répartition en carburant. Ces tourbillons contra-rotatifs d'axe horizontal (flèches F2 et F3, figure 7), communément désignés par l'homme du métier sous le vocable "tumble" et "tumble inversé", qui sont induits au cours de la phase d'admission, ne pourront pas se structurer au cours de la phase de compression, compte tenu des forts cisaillements induits à la frontière de ces deux zones de l'écoulement.

## Revendications

1. Moteur à combustion interne à injection directe et allumage commandé, comprenant une chambre de combustion à bougie centrée et injecteur excentré par rapport à l'axe du cylindre-moteur, **caractérisé par le fait qu'**il comprend un élément de culasse en forme de toit (4) dont l'arête (12) s'étend entre les orifices d'admission et les orifices d'échappement avec l'injecteur (16) débouchant dans la chambre entre les plans diamétraux verticaux (P3, P4), perpendiculaires à l'arête (12), des orifices d'admission, et **par le fait que** l'injecteur (16) est à la fois incliné (A) par rapport au plan (P1) du joint de culasse et par rapport à un plan (P2) perpendiculaire à l'arête du toit.

2. Moteur selon la revendication 1, **caractérisé par le fait qu'**il comprend un premier conduit d'admission (6) raccordé sensiblement verticalement sur l'un des orifices d'admission, le corps de l'injecteur (16) étant au moins partiellement situé sous ce conduit d'admission.

3. Moteur selon la revendication 2, **caractérisé par le fait qu'**il comprend un deuxième conduit d'admission (5) raccordé sensiblement horizontalement sur l'autre orifice d'admission, ce deuxième conduit ayant une génératrice (FN) située partiellement dans un plan sensiblement parallèle à celui (P3) contenant les orifices d'échappement (21, 22).

4. Moteur selon l'une des revendications précédentes, **caractérisé par le fait que** l'angle d'inclinaison (A) de l'injecteur avec le plan (P1) du joint de culasse est de l'ordre de 45 degrés.

5. Moteur selon l'une des revendications précédentes, **caractérisé par le fait que** l'angle d'inclinaison (B) de l'injecteur avec le plan (P2) perpendiculaire à l'arête du toit est compris entre environ 15° et environ 20°.

6. Moteur selon l'une des revendications précédentes, **caractérisé par le fait qu'**il comprend également un piston coulissant (3) dont la face supérieure comporte une cavité excentrée (15) située sous les orifices d'admission, la bougie et l'injecteur.

7. Moteur selon la revendication 6, **caractérisé par le fait que** la cavité (15) du piston présente une dimension plus importante dans une direction parallèle à l'arête du toit que dans une direction perpendiculaire à l'arête du toit.

8. Moteur de combustion selon la revendication 6 ou 7, **caractérisé par le fait que** le fond de la cavité (15) est sensiblement plat.

9. Moteur selon la revendication 6, 7 ou 8, **caractérisé par le fait que** la cavité (115) comporte un bossage interne central (118).

10. Moteur selon l'une des revendications 6 à 9, **caractérisé par le fait que** la face supérieure du piston (3, 103) épouse partiellement la forme de l'élément de culasse (4).

## Claims

1. A direct-injection, controlled-ignition internal combustion engine comprising a combustion chamber with a spark plug centred and an injector off-centre with respect to the axis of the engine cylinder, **characterised in that** it comprises a cylinder head member in the form of a roof (4) whose ridge (12) extends between the intake openings and the exhaust openings in which the injector (16) communicates with the chamber between the vertical diametrical planes (P3, P4), perpendicular to the ridge (12), of the intake openings, and **in that** the injector (16) is both inclined (A) with respect to the plane (P1) of the cylinder head gasket and with respect to a plane (P2) perpendicular to the ridge of the roof.

2. An engine as claimed in claim 1, **characterised in that** it comprises a first intake duct (6) connected substantially vertically with respect to one of the intake openings, the body of the injector (16) being at least partially located below this intake duct.

3. An engine as claimed in claim 2, **characterised in that** it comprises a second intake duct (5) connected substantially horizontally with respect to the other intake opening, this second duct having a generatrix (FN) disposed partially in a plane substantially parallel to the plane (P3) containing the exhaust openings (21, 22).

4. An engine as claimed in one of the preceding claims, **characterised in that** the angle of inclination (A) of the injector with respect to the plane (P1) of the cylinder head gasket is of the order of 45 degrees.

5. An engine as claimed in one of the preceding claims, **characterised in that** the angle of inclination (B) of the injector with respect to the plane (P2) perpendicular to the ridge of the roof is between approximately 15° and approximately 20°.

6. An engine as claimed in one of the preceding claims, **characterised in that** it also comprises a sliding piston (3) whose upper surface comprises an off-centre cavity (15) disposed below the intake openings, the spark plug and the injector.

7. An engine as claimed in claim 6, **characterised in that** the cavity (15) of the piston has a larger dimension in a direction parallel to the ridge of the roof than in a direction perpendicular to the ridge of the roof.

8. A combustion engine as claimed in claim 6 or 7, **characterised in that** the base of the cavity (15) is substantially flat.

9. An engine as claimed in claim 6, 7 or 8, **characterised in that** the cavity (115) comprises a central inner boss (118).

10. An engine as claimed in one of claims 6 to 9, **characterised in that** the upper surface of the piston (3, 103) partially matches the shape of the cylinder head member (4).

## Patentansprüche

1. Verbrennungsmotor mit Direkteinspritzung und Fremdzündung, mit einer Verbrennungskammer, die eine bezüglich der Achse des Motorzylinders zentrierte Zündkerze und eine dazu exzentrisch angeordnete Einspritzdüse aufweist, **dadurch gekennzeichnet, dass** er ein dachförmiges Zylinderkopfteil (4) aufweist, dessen Kante 12 sich zwischen den Einlassöffnungen und den Auslassöffnungen erstreckt, wobei die Einspritzdüse (16) in der Kammer zwischen senkrechten sich diametral gegenüberliegenden senkrecht zur Kante (12) verlaufenden Ebenen (P2, P4) für die Einlassöffnungen mündet und dadurch, dass die Einspritzdüse (16) sowohl bezüglich der Ebene (P1) der Zylinderkopfdichtung als auch bezüglich einer Ebene (P2) senkrecht zur Dachkante geneigt ist.

2. Motor nach Anspruch 1, **dadurch gekennzeichnet, dass** er eine erste Einlassleitung (6) aufweist, die im Wesentlichen in senkrechter Richtung mit einer der Einlassöffnungen verbunden ist, wobei der Hauptteil der Einspritzdüse (16) wenigstens teilweise unterhalb der Einlassleitung angeordnet ist.

3. Motor nach Anspruch 2, **dadurch gekennzeichnet, dass** er eine zweite Einlassleitung (5) aufweist, die im Wesentlichen in waagerechter Richtung mit der anderen Einlassöffnung verbunden ist, wobei diese zweite Leitung eine Erzeugende FN aufweist, die teilweise in einer Ebene liegt, die im Wesentlichen parallel zur derjenigen (P3) ist, in der die Auslassöffnungen (21, 22) angeordnet sind.

4. Motor nach einem der vorhergehenden Ansprüche, **dadurch gekennzeichnet, dass** der Neigungswinkel (A) der Einspritzdüse zur Ebene P1 der Zylinderkopfdichtung in der Größenordnung von 45° liegt.

5. Motor nach einem der vörhergehenden Ansprüche, **dadurch gekennzeichnet, dass** der Neigungswinkel (B) der Einspritzdüse zur Ebene (P2) senkrecht zur Dachkante zwischen ungefähr 15° und ungefähr 20° liegt.

6. Motor nach einem der vorhergehenden Ansprüche, **dadurch gekennzeichnet, dass** er außerdem einen gleitenden Kolben (3) aufweist, dessen Oberseite mit einer exzentrischen Aussparung (15) versehen ist, die unter den Einlassöffnungen, der Kerze und der Einspritzdüse angeordnet ist.

7. Motor nach Anspruch 6, **dadurch gekennzeichnet, dass** die Aussparung (15) des Kolbens eine Abmessung aufweist, die in einer Richtung parallel zur Dachkante größer ist als in einer Richtung senkrecht zur Dachkante.

8. Verbrennungsmotor nach Anspruch 6 oder 7, **dadurch gekennzeichnet, dass** der Boden der Aussparung (15) im Wesentlichen eben ist.

9. Motor nach Anspruch 6, 7 oder 8, **dadurch gekennzeichnet, dass** die Aussparung (115) einen inneren mittigen Vorsprung (118) aufweist.

10. Motor nach einem der Ansprüche 6 bis 9, **dadurch gekennzeichnet, dass** die Oberseite des Kolbens (3, 103) teilweise an die Form des Zylinderkopfteiles (4) angepasst ist.
